# EUROPÄISCHE PATENTSCHRIFT

(11) **EP 2 609 358 B1**
(45) Veröffentlichungstag und Bekanntmachung des Hinweises auf die Patenterteilung: **14.01.2015**
(21) Anmeldenummer: 11736075.0
(22) Anmeldetag: 21.07.2011
(51) Int. Cl.: F16M 1/00, A23C 19/08

(54) **VORRICHTUNG ZUR HERSTELLUNG VON SCHMELZKÄSEPORTIONEN**
DEVICE FOR THE PRODUCTION OF PROCESS CHEESE PIECES
DISPOSITIF POUR LA PRODUCTION DE MORCEAUX DE FROAMGE FONDU

(30) Priorität: 25.08.2010 DE 102010035522
(43) Veröffentlichungstag der Anmeldung: 03.07.2013
(73) Patentinhaber: Hochland SE, 88178 Heimenkirch (DE)
(72) Erfinder: BIGGEL, Andreas, 88145 Hergatz (DE); SCHMIDT, Sebastian, 88131 Lindau (DE); BECHTELER, Richard, 88178 Heimenkirch (DE); BURGER, Josef, 88299 Leutkirch-Reichenhofen (DE); HANDERER, Thomas, 88178 Helmenkirch (DE)
(74) Vertreter: Braun-Dullaeus, Karl-Ulrich
(86) Internationale Anmeldenummer: PCT/EP2011/062494
(87) Internationale Veröffentlichungsnummer: WO 2012/025313

(56) Entgegenhaltungen:
- AU-A- 7 059 181
- GB-A- 2 115 532
- GB-A- 2 264 165
- US-A- 3 951 228
- US-A- 5 253 665

## Beschreibung

Die Erfindung betrifft eine Vorrichtung zur Herstellung von Schmelzkäseportionen, umfassend mehrere in Produktionsrichtung aufeinanderfolgende Module, in denen der Schmelzkäse zu einem Band geformt, gekühlt und portioniert wird, wobei die Module einen Produktionsraum definieren, den der Schmelzkäse während der Herstellung der Schmelzkäseportionen durchläuft.

Bei der Herstellung eines Lebensmittels ist stets darauf zu achten, dass das Produkt beim Durchlaufen der Produktionsanlage nicht verunreinigt wird. Mit Keimen oder Schmutz in Kontakt gekommene Lebensmittel sind für den Hersteller ein nicht zu unterschätzendes Risiko. Sie verderben nicht nur vor Ablauf der vorgesehenen Haltbarkeit und müssen aus dem Handel genommen werden, unbemerkt verspeist können sie beim Konsumenten auch zu Gesundheitsbeeinträchtigungen führen.

Für die Produktion eines hygienisch einwandfreien Lebensmittels ist die Keimarmut der Produktionsanlage somit unabdingbar. Notwendigerweise muss die Produktion regelmäßig unterbrochen werden, damit die Produktionsanlage wieder in einen keimarmen Zustand versetzt werden kann. Die Reinigung kostet wertvolle Produktionszeit und ist mit einigem Aufwand verbunden, insbesondere wenn hierfür einzelne Komponenten der Anlage ausgebaut werden müssen.

Um den Schmutzeintrag zu minimieren, sollte die Produktionsanlage in einem hygienisch möglichst einwandfreien Produktionsraum aufgestellt sein. Um bakteriologisch wirklich sicher produzieren zu können, ist nicht nur die Anlage selbst zu reinigen, sondern eine Reinraum-Umgebung erforderlich. Die Produktionsumgebung hat somit einen wesentlichen Einfluss auf die Häufigkeit der Reinigungszyklen. Die Anforderung, ganze Räume keimfrei zu halten, ist aber nur mit hohem Aufwand darstellbar. Dies schränkt die Einsatzmöglichkeit der aus der Schmelzkäseproduktion bekannten großen und offenen Produktionsanlagen ein.

Der erforderliche Reinigungs-Aufwand kann verringert werden, indem keimarm zu haltende Anlagenteile vom Rest der Produktionshalle bzw. der Anlage getrennt gehalten werden. So werden in der automatisierten Getränkeabfüllung sogenannte aseptische Füller verwendet. Ein aseptischer Füller ist der eigentliche Abfüll-Bereich, der durch eine Einhausung vom Rest der Abfüll-Anlage abgetrennt ist. Die Einhausung definiert einen in sich geschlossenen, vom Rest der Anlage separierten Produktionsraum in der unmittelbaren Umgebung der Abfüllung. Der Produktionsraum umschließt und schützt den Abfüll-Bereich, die gewünschte Keimarmut wird durch eine regelmäßige Reinigung seiner Außen- und Innenflächen erreicht.

Der Aufwand, einen auf diese Weise eingehausten Produktionsraum keimarm zu halten, ist im Vergleich zu einer offen gehaltenen Abfüllung wesentlich geringer. Die Reinigung eines derart eingehausten Produktionsraums kann beispielsweise über fest in der Einhausung installierte Reinigungssysteme per cleaning in place (CIP) durchgeführt werden.

Derartige Einhausungen werden bei der Herstellung von Schmelzkäseportionen nicht verwendet. Dies liegt vor allem daran, dass für die Verarbeitung von Schmelzkäse mehrere Arbeitsschritte erforderlich sind, die alle eine hygienisch einwandfreien Umgebung erfordern. Die eingesetzten Produktionsanlagen sind auch wesentlich größer und zudem deutlich kompliziert aufgebaut als ein eng begrenzter und einfach abzuschirmender Abfüll-Bereich für Getränkeflaschen. Statt durch geschlossene und leicht zu reinigenden Rohrleitungen zu fließen, wird der zu verarbeitende Schmelzkäse während der Strangformung über weite Strecken offen geführt. Dabei kommt die Schmelzkäsemasse großflächig mit den Walzen und Bändern der Anlage in Berührung. Um eine einwandfreie hygienische Qualität des produzierten Schmelzkäses gewährleisten zu können, müsste nicht nur ein Teilbereich der Anlage, sondern der gesamte Produktionsstrang eingehaust werden.

Darüber hinaus erfordert die Herstellung von Schmelzkäseportionen immer wieder ein Eingreifen des Bedienpersonals. Die Anlage muss somit stets zugänglich sein. Zudem sollte eine Einhausung so ausgeführt sein, dass ein Herausspritzen der im Produktionsraum während eines CIP versprühten Reinigungs- und Spülungsmittel verhindert wird. Eine dichte, zum Zwecke der Keimarmut vorgesehene Einhausung ist aber weder auf einfache Weise zu öffnen noch ermöglicht sie einen direkten Zugang zu allen relevanten Anlagenteilen.

Aufgabe der vorliegenden Anmeldung ist es deshalb, die Produktion von hygienisch einwandfreien Schmelzkäseportionen zu vereinfachen.

Diese Aufgaben wird durch eine Vorrichtung mit den Merkmalen des Anspruchs 1 gelöst. Vorteilhafte Ausführungsformen sind in den Unteransprüchen genannt. Ein wesentlicher Grundgedanke der Erfindung ist es, den Produktionsraum mit einer spritzdichten Kapselung zu umschließen, wobei die Kapselung eine Rahmenstruktur und mehrere lösbar mit der Rahmenstruktur verbundene Blechelemente aufweist, und wobei zwischen einem Blechelement und dem ihm gegenüberliegenden Bereich der Rahmenstruktur ein das Blechelement oder den ihn gegenüberliegenden Bereich der Rahmenstruktur umlaufender Dichtungsschlauch angeordnet ist.

Der umlaufende Dichtungsschlauch ist derart angeordnet, dass er bei geschlossen Blechelement durch äußere Krafteinwirkung zwischen der Rahmenstruktur und dem Blechelement eingepresst wird. Dabei verformt sich der hohle Dichtungsschlauch elastisch, so dass der Spalt zwischen dem Blechelement und der Rahmenstruktur auch unter widrigen Bedingungen, wie beispielsweise dem Auftreten von Vibrationen im Betrieb, vollständig geschlossen bleibt. Die derart eingekapselte Produktionsanlage ist so sicher vor Schmutzeintragungen oder bakteriellen Verunreinigungen von außen geschützt.

Der umlaufende Dichtschlauch ist flexibel genug, um eventuelle Fertigungstoleranzen der Rahmenstruktur ausgleichen zu können. Die vorgesehene Rahmenstruktur unterliegt somit keiner besonderen Anforderungen, sondern kann aus standardisierten Profilen mit geringen Toleranzen zusammengesetzt werden, die leicht zu fertigen und zu montieren sind. Die Standardisierung erlaubt zudem eine einfache Anpassung der Kapselung an verschiedene Typen solcher Produktionsanlagen.

Dank der lösbar mit der Rahmenstruktur verbundenen Blechelemente sind die einzelnen Anlagenelemente leicht zugänglich, das hierfür zu öffnende Blechelement ist aber stets wieder dicht verschließbar. Mit jedem Schließen der Blechelemente wird der Dichtungsschlauch erneut elastisch verformt und die Dichtwirkung der Schlauchdichtung wieder hergestellt. Die umlaufende Schlauchdichtung bietet einen hohen Abdichtungsgrad, so dass der Produktionsraum zuverlässig abgedichtet ist. Auf zusätzliche Dichtelemente kann verzichtet werden. Die erfindungsgemäße Kapselung erfüllt demnach alle hygienischen Anforderungen für einen keimarmen Produktionsraum. Darüber hinaus ermöglicht die umlaufende Schlauchdichtung durch ihren unkomplizierte Aufbau und Montage eine einfache Kontrolle und Reinigung der Dichtung sowie deren leichten Austausch.

Der umlaufende Dichtungsschlauch ist insbesondere einstückig ausgeführt, womit die Dichtigkeit beeinträchtigende Nahtstellen reduziert werden. Die Nahtstellen öffnen sich insbesondere während eines temperaturbedingten Ausdehnens der Kapselung. Je nach Schmelzkäseart wird die Schmelzkäsemasse vor der Formung auf Temperaturen erhitzt, die 60° Celsius deutlich überschreiten. Die einstückig ausgeführte Schlauchdichtung verbessert die Funktionssicherheit der Dichtung über einen großen Temperaturbereich.

Um die Sicht auf einzelne Anlagenteile zu ermöglichen, können die Blechelemente auch mit einem eingelegtem Sichtfenster ausgestattet sein. Dies ermöglicht eine hohe Transparenz auch bei geschlossener Kapselung und damit eine ständige Sichtkontrolle der Anlage und ihrer Funktionen im Betrieb.

Vorzugsweise ist der das Blechelement oder den ihn gegenüberliegenden Bereich der Rahmenstruktur umlaufende Dichtungsschlauch in der Art einer Labyrinthdichtung aufgebaut. Dieser Dichtungsschlauch weist an seiner Oberfläche eine Mehrzahl von längs verlaufenden Dichtlippen oder Lamellen auf, die sich bei geschlossenem Blechelement einzeln an die angepresste Kontaktfläche anlegen und jede für sich eine Dichtwirkung entfalten. Insbesondere wird eine im horizontalen verlaufenden Teil des Umlaufberreichs auf der Schlauchdichtung stehende Flüssigkeit wirksam zurückgehalten. Der so ausgebildete Dichtungsschlauch hält auch einer mit erhöhten Drücken durchgeführten CIP-Reinigung stand, selbst wenn es während des Abspritzens der Anlage zu einem direktem Auftreffen eines Strahls aus Reinigungs- oder Spülmittel auf die Dichtung kommt. Die erfindungsgemäß eingekapselte Produktionsanlage erlaubt somit eine einfache und schnelle Reinigung des Produktionsraums, auf einen Ausbau von Komponenten der Anlage kann verzichtet werden. Zudem wird das eine Verunreinigung der äußeren Umgebung verursachende Herausspritzen von Flüssigkeiten aus der Kapselung wirksam verhindert.

In einer weiteren bevorzugten Ausführungsform weist ein Blechetement äußere Abkantungen auf, wobei die Abkantungen eine Aufnahme für den Dichtungsschlauch ausbilden. Bilden die Blechelemente selbst die Aufnahme für den Dichtungsschlauch aus, können Blechelemente beliebiger Form und Größe eingesetzt werden, ohne dass an der Dichtungsaufnahme Änderungen erforderlich sind. Die an den Rändern des Blechelements verlaufende Abkantung formt eine Aufnahme aus, die genau auf die Maße des jeweiligen Blechelements abgestimmt ist. Das Blechelement bildet so stets seine eigene Dichtungsaufnahme auf. Eine separate Anpassung der Dichtungsaufnahme bei einer Formänderung der Blechelement entfällt. Zudem stabilisieren und versteifen die äußeren Abkantungen die Blechelemente.

Vorzugsweise ist ein Blechelement schwenkbar an der Rahmenstruktur gehalten und die dem schwenkbar an der Rahmenstruktur gehaltenen Blechelement gegenüberliegenden Teile der Rahmenstruktur weisen einen umlaufenden Steg auf, der eine Aufnahme für den Dichtungsschlauch ausbildet. Ein schwenkbar an der Rahmenstruktur befestigtes Blechelement ist besonders leicht zu öffnen und ermöglicht einen schnellen Zugang zu den dahinter liegenden Anlagenteilen. Das zum Öffnen verschwenkte Blechelement wird weiter von der Rahmenstruktur gehalten und kann nach Beendigung der Arbeiten durch ein einfaches Rückschwenken wieder verschlossen werden. Der Dichtungsschlauch wird von einem Steg getragen, der die dem Blechelement gegenüberliegenden Teile der Rahmenstruktur vollständig umläuft. Der insbesondere auf den Steg aufgesteckte Dichtungsschlauch dichtet so das geschlossene Blechelement zuverlässig ab.

In einer besonders bevorzugten Ausführungsform ist der Produktionsraum mit einer Luftaufbereitung verbunden, mittels der aufbereitete Luft in den Produktionsraum einleitbar ist. Diese Ausführungsform erlaubt es, die abgekapselte Produktionsanlage weitgehend autark zur Luftqualität der sie umgebenden Räumlichkeit einzusetzen. Die Luftaufbereitung versorgt den abgekapselten Produktionsbereich sozusagen mit einer eigenen, auf eine keimarme Produktion hin ausgerichteten Atmosphäre. Der Aufwand, ganze Produktionshallen keimfrei bzw. keimarm zu halten, entfällt. Vorteilhafterweise wird im Inneren der Kapselung ein leichter Überdruck erzeugt, so dass Luft von außen nicht in den Produktionsraum eindringen kann.

Vorzugsweise umfasst die Luftaufbereitung ein Modul zur Filterung und/oder Trocknung und/oder Kühlung der in den Produktionsraum eingeleiteten Luft. Die entsprechenden Module erlauben es, ein die Schmelzkäseproduktion optimales Klima innerhalb des Produktionsraums einzurichten. Ein Modul zur Reinraumfilterung verringert die Keimzahl der in den Produktionsraum geleiteten Luft. Eine Kühlung und/oder Trocknung der Luft verhindert die Bildung von Kondenswasser im Produktionsraum und dämpft die Reproduktionsrate eventuell vorhandener Keime.

In einer weiteren bevorzugten Ausführungsform ist der Lufteinlass der Luftaufbereitung derart mit dem Produktionsraum verbunden, dass die den Produktionsraum durchströmende Luft in einem geschlossenen Kreislauf geführt wird. Die aufbereitete Luft wird in Folge umgewälzt. Eine derartige Wiederverwendung der Luft verringert den für die Aufbereitung notwendigen Energieeinsatz.

Vorzugsweise ist die Luftaufbereitung in die Kapselung des Produktionsraums integriert. In diesem Fall entfällt eine separate Kapselung der Luftaufbereitung, wodurch der Aufbau der Produktionsanlage vereinfacht wird. Die Integration erlaubt zudem, die Luftaufbereitung in die CIP zu integrieren. Eine CIP-Reinigung der Anlage umfasst somit alle für Keimarmut des Produktionsraums wesentlichen Komponenten.

Verschiedene Aspekte der erfindungsgemäßen Vorrichtung werden anhand der folgenden Figuren beispielhaft erläutert. Dabei zeigen
Figur 1: Eine Aufsicht auf zwei an der Rahmenstruktur befestigte Blechelemente;
Figur 2: Einem Schnitt längs der Linie A-A von Figur 1;
Figur 3: Einen Schnitt durch den mit B bezeichneten Bereich aus Figur 1;
Figuren 4 und 5: Ein Ausführungsbeispiel einer erfindungsgemäßen Luftaufbereitung;

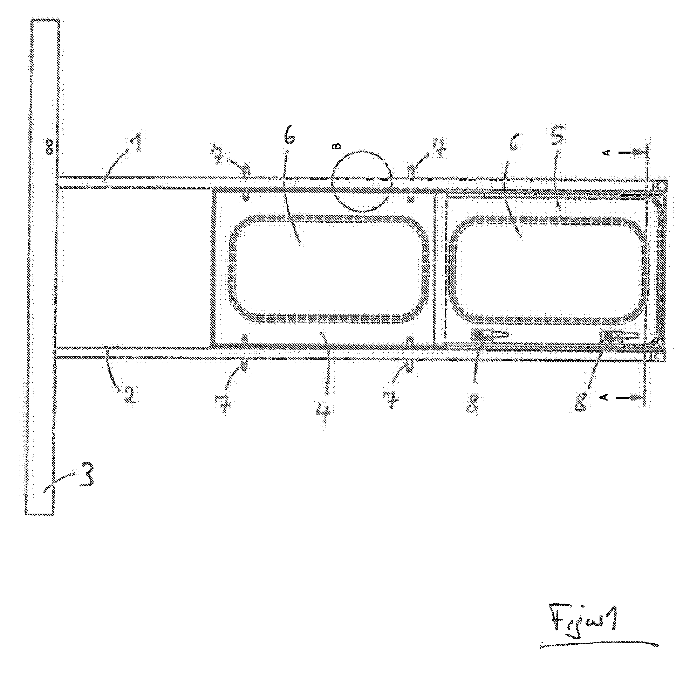

Figur 1 zeigt ein Teil einer Rahmenstruktur mit zwei parallel zueinander ausgerichteten, senkrechten Trägern 1, 2. Die beiden Träger 1, 2 werden von einem horizontalen Grundträger 3 der Rahmenstruktur gehalten. Zwischen den Trägern 1, 2 sind zwei Blechelemente 4, 5 angeordnet, die an den Trägern 1, 2 befestigt sind.

Beide Blechelemente weisen ein zentrales Sichtfenster 6 auf, das die Kontrolle der dahinter liegenden Produktionsanlage erlaubt, ohne die Kapselung öffnen zu müssen. Das Blechelement 4 ist lösbar mit den Trägern 1, 2 verbunden. Vier in den Trägern 1, 2 geführte Stifte 7, jeweils zwei pro Träger, halten das Blechelement 4 an der Rahmenstruktur. Dabei wird eine in einer äußeren Abkantungen des Blechelements gehaltene Schlauchdichtung zwischen dem Blechelement 4 und der Rahmenstruktur elastisch verformt. Die Schlauchdichtung liegt an den beiden Träger 1 und 2 und, wenn vorhanden, an einem diese verbindenden Träger an. Die umlaufende Schlauchdichtung dichtet das Blechelement 4 vollständig gegenüber der Rahmenstruktur ab.

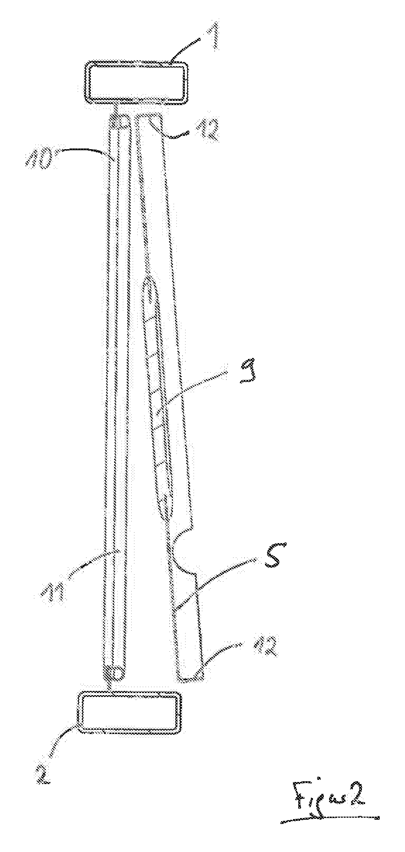

Das Blechelement 5 ist schwenkbar an dem Träger 1 befestigt und ist im geschlossenen Zustand gegenüber den Trägern 1 und 2 sowie dem hier vorhandenen, diese verbindenden Träger 9 abgedichtet. Der quer ausgerichtete Träger 9 ist in der Figur 1 gezeigten Aufsicht von dem Blechelement 5 verdeckt. Zwei an dem Träger 2 verschließbare Verschlüsse 8 halten das schwenkbare Blechelement 5 in seiner geschlossenen Position. Die Abdichtung des Blechelements 5 wird in der Figur 2 näher erläutert.

Die Figur 2 zeigt einem Schnitt längs der Linie A A von Figur 1. Das von einem nicht gezeigten Scharnier gehaltene, ein Sichtfenster 9 umfassende Blechelement 5 wird in Figur 2 in einer angewinkelten, also leicht geöffneten Position gezeigt. Die Träger 1, 2 und 9 der Rahmenstruktur weisen ein Hohlprofil auf, von dem zur Abdichtung der schwenkbar gelagerten Blechelemente ein Steg 10 absteht. Auf den Steg 10 ist eine hohle Schlauchdichtung 11 aufgesteckt. Der Steg wird an dem hier nicht gezeigten quer ausgerichteten Träger 9 fortgeführt, so dass er die zwischen den Trägern ausgebildete Öffnung der Rahmenstruktur an ihrer Innenseite vollständig umläuft. Wird das Blechelement 5 gegen die Rahmenstruktur verschwenkt, wird der Dichtungsschlauch 11 zwischen dem Steg 10 und dem äußeren Rand des Blechelements 5 elastisch verformt und dichtet den Spalt zwischen Rahmenstruktur und Blechelement 5 vollständig ab. Äußere, der Rahmenstruktur abgewandte Abkantungen 12 stabilisieren das Blechelement und gewährleisten einen gleichmäßigen Anpressdruck des Blechelements gegen den Dichtschlauch 10.

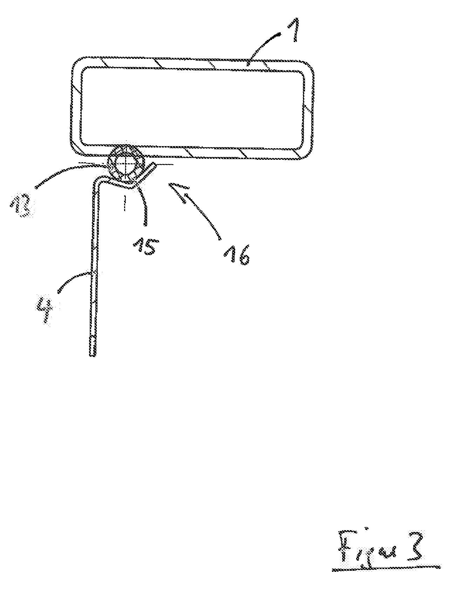

Die Figur 3 zeigt einen Schnitt durch den mit B bezeichneten Bereich aus Figur 1. An dem Hohlträger 1 liegt eine hohle Schlauchdichtung 13 an. Das Blechelement 4 weist an seinem äußeren Rand eine angewinkelte Abkantung 15 auf, die eine Dichtungsaufnahme 16 für den das Blechelement 4 umlaufenden Dichtungsschlauch 13 ausbildet.

Ist, wie in Figur 1 gezeigt, zwischen den aufeinanderfolgenden Blechelementen 4 und 5 kein quer verlaufender Träger vorgesehen, überlappt das schwenkbar gelagerte Blechelement 5 das lösbar befestigte Blechelement 4. Beide Blechelemente bilden im Überlappungsbereich eine sich gegenseitig hintergreifende Falz aus. Die in Art einer Labyrinthdichtung ausgebildeten Metallstege verhindern einen Austritt von Flüssigkeit aus der Einhausung, so dass auf eine zusätzliche Dichtung verzichtet werden kann.

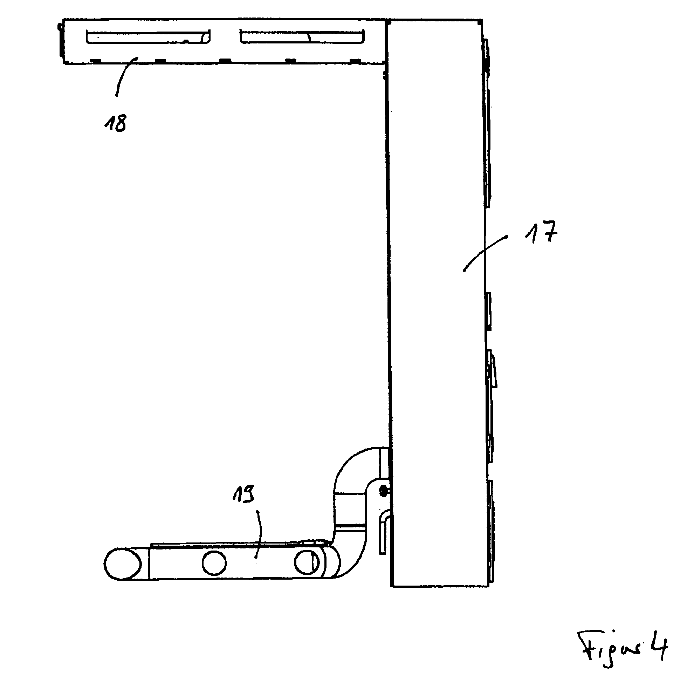

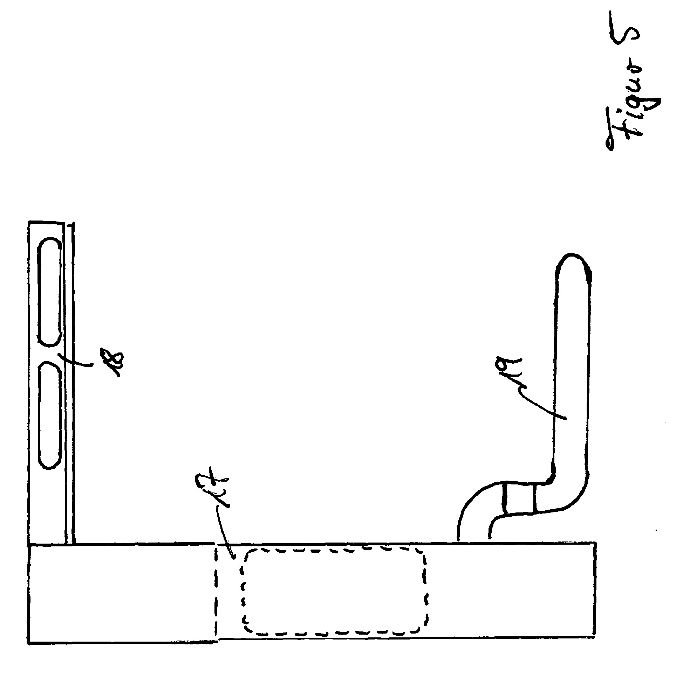

Die Figuren 4 und 5 zeigen eine Luftaufbereitung 17 mit einer zuleitenden 18 und ableitenden 19 Luftführung. Die eingehauste Luftaufbereitung 17 umfasst mehrere Module, in der die durchgeleitete Luft getrocknet und temperiert wird sowie eine Auffangvorrichtung für das abgeschiedene Kondenswasser.

## Patentansprüche

1. Vorrichtung zur Herstellung von Schmelzkäseportionen, umfassend mehrere in Produktionsrichtung aufeinanderfolgende Module, in denen der Schmelzkäse zu einem Band geformt, gekühlt und portioniert wird, wobei die Module einen Produktionsraum definieren, den der Schmelzkäse während der Herstellung der Schmelzkäseportionen durchläuft,
**dadurch gekennzeichnet,**
**dass** eine spritzdichte Kapselung den Produktionsraum umschließt, wobei die Kapselung eine Rahmenstruktur (1, 2, 3) und mehrere lösbar mit der Rahmenstruktur verbundene Blechelemente aufweist, und dass zwischen einem Blechelement und dem ihm gegenüberliegenden Bereich der Rahmenstruktur ein das Blechelement (4, 5) oder den ihm gegenüberliegenden Bereich der Rahmenstruktur umlaufender Dichtungsschlauch (11) angeordnet ist.

2. Vorrichtung nach Anspruch 1,
**dadurch gekennzeichnet,**
**dass** der das Blechelement oder den ihm gegenüberliegenden Bereich der Rahmenstruktur umlaufende Dichtungsschlauch in der Art einer Labyrinthdichtung aufgebaut ist.

3. Vorrichtung nach Anspruch 1 oder 2,
**dadurch gekennzeichnet,**
**dass** ein Blechelement äußere Abkantungen (12) aufweist, wobei die Abkantungen eine Aufnahme für den Dichtungsschlauch ausbilden.

4. Vorrichtung nach Anspruch 1 oder 2,
**dadurch gekennzeichnet,**
**dass** ein Blechelement schwenkbar an der Rahmenstruktur gehalten ist
und das die dem schwenkbar an der Rahmenstruktur gehaltenen Blechelement gegenüberliegenden Teile der Rahmenstruktur einen umlaufenden Steg aufweisen, der eine Aufnahme für den Dichtungsschlauch ausbildet.

5. Vorrichtung nach einem der Ansprüche 1 bis 4,
**dadurch gekennzeichnet,**
**dass** der Produktionsraum mit einer Luftaufbereitung (17) verbunden ist,
mittels der aufbereitete Luft in den Produktionsraum einleitbar ist.

6. Vorrichtung nach Anspruch 5,
**dadurch gekennzeichnet,**
**dass** die Luftaufbereitung ein Modul zur Filterung und/oder Trocknung und/oder Kühlung der in den Produktionsraum eingeleiteten Luft umfasst.

7. Vorrichtung nach einem der Ansprüche 5 oder 6,
**dadurch gekennzeichnet,**
**dass** der Lufteinlass der Luftaufbereitung derart mit dem Produktionsraum verbunden ist, dass die den Produktionsraum durchströmende Luft in einem geschlossenen Kreislauf geführt wird.

8. Vorrichtung nach einem der Ansprüche 5 oder 6,
**dadurch gekennzeichnet,**
**dass** die Luftaufbereitung in die Kapselung des Produktionsraums integriert ist.

## Claims

1. A device for producing processed cheese portions, comprising a plurality of modules disposed successively in the direction of production, in which the processed cheese is formed into a strip, cooled and divided into portions, wherein the modules define a production space through which the processed cheese passes during production of the processed cheese portions,
**characterized in**
**that** a spray-proof encapsulation encloses the production space, wherein the encapsulation comprises a frame structure (1, 2) and a plurality of sheet metal elements, which are detachably connected to the frame structure, and that a sealing tube (11) is disposed between a sheet metal element (4, 5) and the region of the frame structure opposite thereto and encircles the sheet metal element or the region of the frame structure opposite thereto.

2. Device according to claim 1,
**characterized in**
**that** the sealing tube encircling the sheet metal element or the region of the frame structure opposite thereto is designed in the manner of a labyrinth seal.

3. Device according to claim 1 or 2,
**characterized in**
**that** a sheet metal element comprises external bent edges (12), wherein the bent edges form a receptacle for the sealing tube.

4. Device according to claim 1 or 2,
**characterized in**
**that** a sheet metal element is swivellably held on the frame structure, and wherein the parts of the frame structure opposite the sheet metal element that is swivellably held on the frame structure comprise a circumferential web, which forms a receptacle for the sealing tube.

5. Device according to one of claims 1 to 4,
**characterized in**
**that** the production space is connected to an air treatment system (17), by way of which treated air can be introduced into the production space.

6. Device according to claim 5,
**characterized in**
**that** the air treatment system comprises a module for filtering and/or drying and/or cooling the air that is introduced into the production space.

7. Device according to one of claims 5 or 6,
**characterized in**
**that** the air intake of the air treatment system is connected to the production space such that the air flowing through the production space is conducted in a closed circuit.

8. Device according to one of claims 5 or 6,
**characterized in**
**that** the air treatment system is integrated into the encapsulation of the production space.

## Revendications

1. Dispositif de production de portions de fromage fondu, comprenant plusieurs modules successifs dans la direction de production dans lesquels le fromage fondu est moulé en une bande, refroidi et portionné, les modules définissant un espace de production que le fromage fondu traverse pendant la production des portions de formage fondu,
**caractérisé en**
**ce qu'**un blindage étanche aux projections entoure l'espace de production, le blindage comportant une structure en cadre (1, 2) et plusieurs éléments en tôle reliés de manière amovible avec la structure en cadre et **en ce qu'**entre un élément en tôle et la zone qui lui est opposée de la structure en cadre est placé un flexible d'étanchéité (11) entourant l'élément en tôle (4, 5) ou la zone qui lui est opposée de la structure en cadre.

2. Dispositif selon la revendication 1,
**caractérisé en**
**ce que** le flexible d'étanchéité entourant l'élément en tôle ou la zone qui lui est opposée de la structure en cadre est conçu à la manière d'une garniture en labyrinthe.

3. Dispositif selon la revendication 1 ou la revendication 2,
**caractérisé en**
**ce qu'**un élément en tôle comporte des replis (12), les replis formant un logement pour le flexible d'étanchéité.

4. Dispositif selon la revendication 1 ou la revendication 2,
**caractérisé en**
**ce qu'**un élément en tôle est maintenu de manière pivotante sur la structure en cadre et **en ce que** les parties de la structure en cadre opposées à l'élément en tôle maintenu de manière pivotante sur la structure en cadre comportent une barrette périphérique qui forme un logement pour le flexible d'étanchéité.

5. Dispositif selon l'une quelconque des revendications 1 à 4,
**caractérisé en**
**ce que** l'espace de production est relié avec un traitement d'air (17) à l'aide duquel de l'air traité peut être introduit dans l'espace de production.

6. Dispositif selon la revendication 5,
**caractérisé en**
**ce que** le traitement d'air comprend un module pour filtrer et/ou pour sécher et/ou pour refroidir l'air introduit dans l'espace de production.

7. Dispositif selon l'une quelconque des revendications 5 ou 6,
**caractérisé en**
**ce que** l'entrée d'air du traitement d'air est relié avec l'espace de production de telle sorte que l'air circulant à travers l'espace de production soit guidé dans un circuit fermé.

8. Dispositif selon l'une quelconque des revendications 5 ou 6,
**caractérisé en**
**ce que** le traitement d'air est intégré dans le blindage de l'espace de production.
